# EUROPÄISCHE PATENTSCHRIFT

(11) **EP 0 757 078 B1**
(45) Veröffentlichungstag und Bekanntmachung des Hinweises auf die Patenterteilung: **27.11.2002**
(21) Anmeldenummer: 96111812.2
(22) Anmeldetag: 23.07.1996
(51) Int. Cl.: C08L 59/00

(54) **Schlagzähe thermoplastische Formmassen**
Impact-resistent thermoplastic moulding compositions
Masses de moulage thermoplastiques résistantes aux chocs

(30) Priorität: 01.08.1995 DE 19528191
(43) Veröffentlichungstag der Anmeldung: 05.02.1997
(73) Patentinhaber: BASF Aktiengesellschaft, 67063 Ludwigshafen (DE)
(72) Erfinder: Kielhorn-Bayer, Sabine, Dr., 67133 Maxdorf (DE); Stutz, Herbert, Dr., 76139 Karlsruhe (DE); Sänger, Dietrich, Dr., 67227 Frankenthal (DE); Lehrich, Friedhelm, Dr., Grosse Ile, Michigan 48138 (US); Rieger, Peter, 68259 Mannheim (DE)

(56) Entgegenhaltungen:
- EP-A- 0 290 761
- EP-A- 0 350 223
- EP-A- 0 409 464

## Beschreibung

Die Erfindung betrifft thermoplastische Formmassen, enthaltend
A) 10 bis 99,5 Gew.-% eines thermoplastischen Polymeren aus der Gruppe der Polyoxymethylene, Polyolefine, Polyester, Polycarbonate, Polystyrol, ABS, ASA, SAN, Polyamide oder Poly(meth)acrylate oder deren Mischungen,
B) 0,5 bis 80 Gew.-% eines thermoplastischen Polyurethans mit einem Schmelzpunkt < 200°C,
C) 0 bis 50 Gew.-% eines faser- oder teilchenförmigen Füllstoffes oder deren Mischungen,
D) 0 bis 30 Gew.-% üblicher Zusatzstoffe und Verarbeitungsmittel,
wobei die Gewichtsprozente der Komponenten A) bis D) 100 % ergeben.

Weiterhin betrifft die Erfindung die Verwendung derartiger Formmassen zur Herstellung von Fasern, Folien und Formkörpern jeglicher Art und die daraus erhältlichen Formkörper.

Polyoxymethylene, welche thermoplastische Polyurethane als Schlagzähmodifier enthalten, sind aus der EP-A 116 456, EP-A 121 407, EP-A 120 711 und EP-A 117 664 bekannt.

Die Abmischung von thermoplastischen Polyurethanen mit anderen Polymeren ist bekannt aus:
- JP-A 56/1 368 38: Mischungen aus Polyester und Polyurethan
- JP-A 58/2 095 27: verstärkte thermoplastische Formmassen aus zwei verschiedenen Thermoplasten und Füllstoff (z.B. Polyurethan + Polystyrol oder ABS + Glaskugeln)
- JP-A 57/0 859 94: Thermoplastische Formmassen (z.B. Polyamid) mit Polyurethan, Ruß und Metallsulfidpulver
- BE-A 882 117: Thermoplastische Formmassen aus TPU und modifiziertem PE und weiteren Thermoplasten wie z.B. Polyester
- JP-A 63/1 267 09: Formmassen, bestehend aus nicht kristallinen Thermoplasten (z.B. Polyamid, PET, Polyolefin oder Polyurethan) und kristallinen Thermoplasten (z.B. Polystyrol, PVC oder ABS).

Bei den bekannten TPU-haltigen Polymermischungen ist die Formbelagsbildung bei der Verarbeitung verbesserungswürdig.

Bei der Herstellung der TPU, die segmentierte Block-Copolymere darstellen, kann man bei gleichen Mengenverhältnissen der Ausgangskomponenten durch Variation der Synthesebedingungen den Block-Aufbau beeinflussen. Im Rahmen einer "One-Shot"-Reaktionsführung entmischen sich die entstehenden Hartsegmente und das Polyurethan-Prepolymer, so daß temperaturabhängig ein mehr oder weniger phasensegregiertes System entsteht. Eine Erhöhung der Reaktionstemperatur resultiert in einer besseren Löslichkeit der Hartsegmente im Reaktionsgemisch, d.h. einer Verminderung der Phasentrennung. Durch die weitgehend einphasig ablaufende Reaktion bei erhöhten Temperaturen ist die Phasenanbindung weiter fortgeschritten als im gegenteiligen Fall.

Da die Polyurethanbildung thermoreversibel ist - eine Reaktion, die hauptsächlich bei Mehrfachextrusion auftritt - dissoziieren die für die Kristallinität verantwortlichen Hartsegmente (auch unterhalb der Schmelztemperatur) und bilden Oligomere, die sich z.B. an der kühlen Innenseite einer Werkzeugform niederschlagen.

Aufgabe der vorliegenden Erfindung war es, thermoplastische Formmassen zur Verfügung zu stellen, die eine möglichst geringe Formbelagsbildung bei der Verarbeitung aufweisen.

Demgemäß wurden die eingangs definierten Formmassen gefunden, welche dadurch gekennzeichnet sind, daß das thermoplastische Polyurethan B) erhältlich ist durch Umsetzung von
a) organischen Diisocyanaten,
b) Polyhydroxylverbindungen mit Molekulargewichten von 500 bis 8000 und
c) Kettenverlängerungsmitteln mit Molekulargewichten von 60 bis 400 in Gegenwart von gegebenenfalls
d) Katalysatoren,
e) Hilfsmitteln und/oder Zusatzstoffen
bei einer Starttemperatur ≥ 100°C, einer Ausgußtemperatur von 140 bis 200°C und anschließender thermischer Reifung.

Bevorzugte Formmassen dieser Art sind in Unteransprüchen zu entnehmen.

Als Komponente A) enthalten die erfindungsgemäßen Formmassen 10 bis 99,5, vorzugsweise 15 bis 99 und insbesondere 20 bis 95 Gew.-% eines thermoplastischen Polymeren aus der Gruppe der Polyoxymethylene, Polyolefine, Polyester, Polycarbonate, Polystyrol, ABS, SAN, ASA, Poly(meth)acrylate oder Polyamide oder deren Mischungen.

Allgemein werden Polyester A auf der Basis von aromatischen Dicarbonsäuren und einer aliphatischen oder aromatischen Dihydroxyverbindung verwendet.

Eine erste Gruppe bevorzugter Polyester sind Polyalkylenterephthalate mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 30 mol.%, vorzugsweise nicht mehr als 10 mol.% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat und Polybutylenterephthalat bevorzugt.

Die relative Viskosität der Polyester (A) liegt im allgemeinen im Bereich von 1,2 bis 1,8 (gemessen in einer 0,5 gew.%igen Lösung in einem Phenol/o-Dichlorbenzolgemisch (Gew.-Verh. 1:1 bei 25°C).

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol.% Isophthalsäure und 0 bis 95 mol.% Terephthalsäure, insbesondere etwa äquivalente Mischungen dieser beiden Säuren.

Die aromatischen Dihydroxyverbindungen haben vorzugsweise die allgemeine Formel III 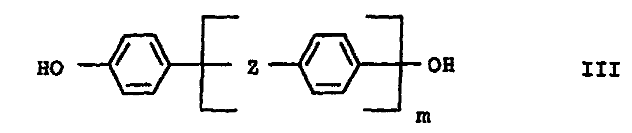 in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 oder 1 hat. Die Verbindungen können an den Phenylengruppen auch C₁-C₆-Alkylgruppen und Fluor, Chlor, oder Brom als Substituenten tragen.

Als Stammkörper dieser Verbindungen seien beispielsweise
Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
Di-(hydroxyphenyl)sulfoxid,
α,α'-Di-(hydroxyphenyl)-dialkylbenzol,
Resorcin und
Hydrochinon sowie deren kernalkylierte oder kernhalogenierte Derivate genannt.

Von diesen werden
4,4'-Dihydroxydiphenyl,
2, 4-Di- (4'-hydroxyphenyl)-2-methylbutan a,a'-Di-(4-hydroxy phenyl)-p-diisopropylbenzol, 2,2-Di(3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di(3',5'-dichlordihydroxyhenyl)propan,
1,1-Di-(4'-hydroxyphenyl)cyclohexan und
2,2-Di-(3',5'-dimethyl-4'-hydroxyphenyl)propan oder deren

Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.% des Polyalkylenterephthalates und 2 bis 80 Gew.% des vollaromatischen Polyesters.

Unter Polyestern im Sinne der vorliegenden Erfindung sollen auch Polycarbonate verstanden werden, die durch Polymerisation von aromatischen Dihydroxyverbindungen, insbesondere Bis-(4-hydroxyphenyl)2,2-propan (Bisphenol A) oder dessen Derivaten, z.B. mit Phosgen erhältlich sind. Entsprechende Produkte sind an sich bekannt und in der Literatur beschrieben sowie größtenteils auch im Handel erhältlich.

Als weitere Komponente A) seien Polystyrole genannt.

Es kommen sowohl Homo- als auch Copolymerisate von vinylaromatischen Monomeren mit 8 bis 12 C-Atomen in Betracht.

Es kommen dabei insbesondere Styrol in Betracht, ferner die kern- oder seitenkettenalkylierten Styrole. Als Beispiele seien Chlorstyrol, α-Methylstyrol, Styrol, p-Methylstyrol, Vinyltoluol und p-tert.-Butylstyrol genannt. Vorzugsweise wird jedoch Styrol allein verwendet.

Die Homopolymerisate werden im allgemeinen nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim 1980). Die Homopolymerisate können Gewichtsmittel des Molekulargewichts M_{w} von 100 bis 300.000 aufweisen, die nach üblichen Methoden bestimmt werden können.

Als Comonomere zur Herstellung von Copolymerisaten kommen z. B. (Meth)acrylsäure, (Meth)acrylsäurealkylester mit 1 bis 4 C-Atomen im Alkylrest, Acrylnitril und Maleinsäureanhydrid sowie Maleinsäureimide, Acrylamid und Methacrylamide sowie N,N- oder N-alkylsubstituierten Derivate mit 1 bis 10 C-Atomen im Alkylrest in Frage.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in der US-P 4 360 618, 4 405 753 und in der Veröffentlichung von J.R. Fried, G.A. Hanna, Polymer Eng. Scie. Band 22 (1982) Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980) beschrieben sind. Die Copolymerisate haben im 5 allgemeinen Gewichtsmittel des Molekulargewichtes (M_{w}) von 10.000 bis 300.000, die nach üblichen Methoden bestimmt werden können.

Bei der Komponente A) handelt es sich vorzugsweise um schlagfest modifiziertes Polystyrol, dessen Kautschukgehalt im allgemeinen von 3 bis 20 Gew.-%, vorzugsweise von 4 bis 15 Gew.-% beträgt.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2 694 692 beschrieben ist, und Verfahren zur Massesuspensionspolymerisation, wie sie beispielsweise in der US-Patentschrift 2 862 906 beschrieben sind. Selbstverständlich sind auch andere Verfahren anwendbar, sofern die gewünschte Teilchengröße der Kautschukphase eingestellt wird.

Als Kautschuke werden die üblicherweise für die Schlagzähmodifizierung von Styrolpolymerisaten gebräuchlichen natürlichen oder synthetischen Kautschuke eingesetzt. Geeignete Kautschuke im Sinne der Erfindung sind neben Naturkautschuk z. B. Polybutadien, Polyisopren und Mischpolymerisate des Butadiens und/oder Isoprens mit Styrol und anderen Comonomeren, die eine Glastemperatur, bestimmt nach K.H. Illers und H. Breuer, Kolloidzeitschrift 190 (1), 16 - 34 (1963), unter -20°C besitzen.

Es können auch Mischungen von schlagfest modifizierten und nicht schlagfest modifizierten vinylaromatischen Polymeren eingesetzt werden, wobei das Mischungsverhältnis beliebig ist.

Als weitere Polymere A) seien ABS, ASA und SAN Polymere aufgeführt. Herstellung und Zusammensetzung sind dem Fachmann geläufig. Derartige Produkte sind im Handel erhältlich.

Die erfindungsgemäßen Formmassen können als Komponente A) Polyethylen oder Polypropylen enthalten.

Bevorzugte Komponente A) ist Polyethylen mit einer hohen Dichte von 0,94 bis 0,98, bevorzugt 0,95 bis 0,96 und insbesondere 0,951 bis 0,958 g/cm³.

Der Schmelzindex MFI beträgt im allgemeinen weniger als 5 g/10 min bevorzugt weniger als 3 g/10 min bei 190°C und einer Belastung von 21,6 kg (bestimmt nach DIN 53 735).

Der Schmelzflußindex entspricht dabei der Menge an Polymerisat, die innerhalb von 10 Minuten aus der nach DIN 53 735 genormten Prüfvorrichtung bei einer Temperatur von 190°C und unter einem Gewicht von 21,6 kg ausgepreßt wird.

Die Herstellung derartiger Polyolefine erfolgt üblicherweise durch Niederdruckpolymerisation mit metallhaltigen Katalysatoren, beispielsweise mit Hilfe von titan- und aluminiumhaltigen Ziegler-Katalysatoren oder im Falle des Polyethylens auch durch Phillips-Katalysatoren auf der Basis von chromhaltigen Verbin-dungen. Die Polymerisationsreaktion kann dabei mit den in der Technik üblichen Reaktoren sowohl in der Gasphase, in Lösung oder auch in einer Aufschlämmung durchgeführt werden. Das Polyethylen oder Polypropylen kann bei der Herstellung der erfindungsgemäßen Polymermischung sowohl als Grieß als auch als Granulat verwendet werden. Es können auch Mischungen des Polyethylens mit Polypropylen eingesetzt werden, wobei das Mischungsverhältnis beliebig ist.

Als besonders bevorzugte Komponente A) seien Polyoxymethylenhomooder Copolymerisate genannt.

Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A) bevorzugt, insbesondere solche, die neben den wiederkehrenden Einheiten -CH₂O- noch bis zu 50, vorzugsweise 0,1 bis 20 und insbesondere 0,3 bis 10 mol-% an wiederkehrenden Einheiten 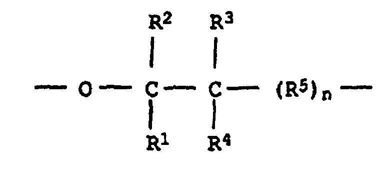 wobei R¹ bis R⁴ unabhängig voneinander ein Wasserstoffatom, eine C₁- bis C₄-Alkylgruppe oder eine halogensubstituierte Alkylgruppe mit 1 bis 4 C-Atomen und R5 eine -CH₂-, -CH₂O-, eine C₁- bis C₄-Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 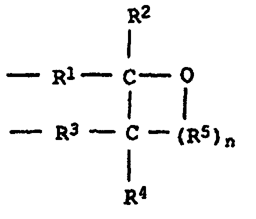 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel 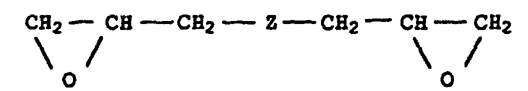 wobei Z eine chemische Bindung, -O-, -ORO- (R- C₁- bis C₈-Alkylen oder C₂- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) M_{w} im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

Als Monomere für Poly(meth)acrylate A) eignen sich C₁- bis C₁₈-Alkylester der Methacrylsäure oder Acrylsäure oder deren Mischungen.

Als Ester der Acrylsäure verwendet man erfindungsgemäß die C₁-C₁₈-Alkylester wie Methyl-, Ethyl-, n-Propyl-, i-Propyl, n-Butyl-, i-Butyl-, sek.-Butyl-, tert.-Butyl-, Pentyl-, Hexyl-, Heptyl-, Oktyl-, 2-Ethylhexyl-, Nonyl-, Decyl-, Lauryl- oder Stearylacrylat, bevorzugt Methylacrylat, n-Butylacrylat und 2-Ethylhexylacrylat sowie Mischungen dieser Monomeren.

Als Ester der Methacrylsäure verwendet man erfindungsgemäß die C₁-C₁₈-Alkylester wie Methyl-, Ethyl-, n-Propyl-, i-Propyl, n-Butyl-, i-Butyl-, sek.-Butyl-, tert.-Butyl-, Pentyl-, Hexyl-, Heptyl-, Oktyl-, 2-Ethylhexyl-, Nonyl-, Decyl-, Lauryl- oder Stearylmethacrylat, bevorzugt Methylmethacrylat, sowie Mischungen dieser Monomeren.

Bevorzugt sind ganz allgemein Polyamide A) mit aliphatischem teilkristallinen oder teilaromatischem sowie amorphem Aufbau jeglicher Art und deren Blends. Entsprechende Produkte sind unter dem Handelsnamen Ultramid® von der BASF AG erhältlich.

Als Komponente B) enthalten die erfindungsgemäßen Formmassen 0,5 bis 80, vorzugsweise 1 bis 60 und insbesondere 5 bis 50 Gew.-% eines thermoplastischen Polyurethans (TPU) mit einem Schmelzpunkt < 200°C, bevorzugt < 195°C, insbesondere < 185°C und ganz besonders bevorzugt < 180°C.

Geeignete TPU werden hergestellt durch Umsetzung von
a) organischen, vorzugsweise aromatischen Diisocyanaten,
b) Polyhydroxylverbindungen mit Molekulargewichten *von* 500 bis 8000 und
c) Kettenverlängerungsmitteln mit Molekulargewichten von 60 bis 400 in Gegenwart von gegebenenfalls
d) Katalysatoren,
e) Hilfsmitteln und/oder Zusatzstoffen.

Zu den hierfür verwendbaren Ausgangsstoffen (a) bis (c), Katalysatoren (d), Hilfsmitteln und Zusatzstoffen (e) möchten wir folgendes ausführen:
a) Als organische Diisocyanate (a) kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat, cycloaliphatische Diisocyanate, wie Isophoron-diisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat. Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-(1,2) und 1,5-Naphthylendiisocyanat. Vorzugsweise verwendet werden Hexamethylen-diisocyanat, Isophoron-diisocyanat, 1,5-Naphthylen-diisocyanat, Diphenylmethan-diisocyanat-Isomerengemische mit einem 4,4'-Diphenylmethan-diisocyanatgehalt von größer als 96 Gew.-% und insbesondere 4,4'-Diphenylmethan-diisocyanat.
b) Als höhermolekulare Polyhydroxylverbindungen (b) mit Molekulargewichten von 500 bis 8000 eignen sich vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung, mit den obengenannten Molekulargewichten. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.
   Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-diethanolamine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylenglykole).
   Vorzugsweise verwendet werden Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist; z.B. insbesondere Polyoxytetramethylenglykole.
   Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids, an das Startermolekül anpolymerisiert.
   Die im wesentlichen linearen Polyetherole besitzen Molekulargewichte von 500 bis 8000, vorzugsweise 600 bis 6000 und insbesondere 800 bis 3500. Sie können sowohl einzeln als auch in Form von Mischungen untereinander zu Anwendung kommen.
   Geeignete Polyesterole können beispielsweise aus Dicarbonsäuren mit 2 bis 12 Kohlenstoffatomen, vorzugsweise 4 bis 8 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.
   Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.
   Als Polyesterole vorzugsweise verwendet werden Dialkylenglykol-polyadipate mit 2 bis 6 Kohlenstoffatomen im Alkylenrest, wie z.B. Ethandiol-polyadipate, 1,4-Butandiol-polyadipate, Ethandiol-butandiol-1,4-polyadipate, 1,6-Hexandiolneopentylglykol-polyadipate, Polycaprolactone und insbesondere 1,6-Hexandiol-1,4-butandiol-polyadipate. Die Polyesterole besitzen Molekulargewichte von 500 bis 6000, vorzugsweise von 800 bis 3500.
c) Als Kettenverlängerungsmittel (c) mit Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di-(β-hydroxyethyl)-hydrochinon, (cyclo)aliphatische Diamine, wie z.B. 4,4'-Diamino-dicyclohexylmethan, 3,3'-Dimethyl-4,4'-diamino-dicyclohexylmethan, Isophoron-diamin, Ethylendiamin, 1,2-, 1,3-Propylen-diamin, N-Methyl-propylendiamin-1,3, N,N'-Dimethyl-ethylendiamin und aromatische Diamine, wie z.B. 2,4- und 2,6-Toluylen-diamin, 3,5-Diethyl-2,4- und -2,6-toluylen-diamin und primäre ortho-di-, tri- und/oder tetraalkylsubstituierte 4,4'-Diamino-diphenylmethane.
   Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1:1 bis 1:12, insbesondere von 1:1,8 bis 1:6,4, wobei die Härte und der Schmelzpunkt der TPU mit zunehmendem Gehalt an Diolen ansteigt.
   Zur Herstellung der TPU werden die Aufbaukomponenten (a), (b) und (c) in Gegenwart von gegebenenfalls Katalysatoren (d), Hilfsmitteln und/oder Zusatzstoffen (e) in solchen Mengen zur Reaktion gebracht, daß das Äquivalenzverhältnis von NCO-Gruppen der Diisocyanate (a) zur Summe der Hydroxylgruppen oder Hydroxyl- und Aminogruppen der Komponenten (b) und (c) 1:0,85 bis 1,20, vorzugsweise 1:0,95 bis 1:1,05 und insbesondere 1:0,98 bis 1,02 beträgt.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetyl-acetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teile Polyhydroxylverbindung (b) eingesetzt.

Neben Katalysatoren können den Aufbaukomponenten (a) bis (c) auch Hilfsmittel und/oder Zusatzstoffe (e) einverleibt werden. Genannt seien beispielsweise Gleitmittel, Inhibitoren, Stabilisatoren gegen Hydrolyse, Licht, Hitze oder Verfärbung, Farbstoffe, Pigmente, anorganische und/oder organische Füllstoffe und Weichmacher.

Nähere Angaben über die obengenannten Hilfsmittel- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-OS 29 01 774 zu entnehmen.

Die Herstellung der thermoplastisch verarbeitbaren Polyurethan-Elastomeren erfolgt nach bekannten Verfahren, kontinuierlich oder diskontinuierlich, sowohl nach dem ökonomischen one-shot-Verfahren, bei dem alle Reaktionspartner nacheinander oder gleichzeitig miteinander gemischt werden, als auch nach dem Präpolymerverfahren, bei dem aus den höhermolekularen Polyester-polyolen und den organischen Diisocyanaten zunächst ein Präpolymeres mit NCO-Endgruppen hergestellt wird, das dann mit dem Kettenverlängerungsund Vernetzungsmittel weiter umgesetzt wird. Die Umsetzung erfolgt durch rasches und intensives Vermischen der Reaktionspartner im Verhältnis von NCO-Gruppen der Diisocyanate zur Summe aller mit NCO-Gruppen reagierenden Wasserstoffatome der Komponenten (b), (c) und (d), vorzugsweise OH-Gruppen, von 1:0,9 bis 1,2, vorzugsweise 1:0,95 bis 1,10 und insbesondere ungefähr 1:1. Da die Reaktion exotherm ist und rasch verläuft, ist sie meist nach wenigen Minuten beendet.

Das erhaltene Polyurethan-Elastomere kann danach thermisch nachbehandelt (Reifung), granuliert und weiterverarbeitet werden. Es ist auch möglich, das Reaktionsgemisch in die Einzugszone eines Extruders einzutragen, wobei die Umsetzung in kurzer Zeit abgeschlossen ist und das fertige Polyurethan-Elastomere am Extruderausgang entnommen und weiterverarbeitet werden kann.

Damit Schmelztemperaturen der TPU's unter 200°C erzielt werden können, empfiehlt es sich, die Umsetzung innerhalb der nachstehenden Temperaturbereiche durchzuführen.

Die Starttemperatur der Reaktionsmischung liegt bei Temperaturen von ≥ 100°C, vorzugsweise 100 bis 130°C und insbesondere 100°C bis 120°C.

Insbesondere betragen die Ausgußtemperaturen beim bevorzugten one-shot-Verfahren beim Ausgießen der Reaktionsmischung auf das Band oder eine vorgewärmte Platte 140 bis 200, vorzugsweise 140 bis 190 und insbesondere 140 bis 170°C.

Die thermische Reifung erfolgt im allgemeinen bei Temperaturen von 60 bis 120, vorzugsweise von 80 bis 120 und insbesondere von 80 bis 100°C über einen Zeitraum von 2 bis 48, vorzugsweise 6 bis 30 und insbesondere 10 bis 25 Stunden.

Die Bestimmung des Schmelzpunktes der TPU-Komponente erfolgt üblicherweise durch Differential-Scanning Colorimetric (DSC) über einen Temperaturbereich von -100°C bis 250°C und einer Aufheizrate von 20°C/min unter Inertgasbedingungen.

Als Komponente C) können die erfindungsgemäßen Formmassen 0 bis 50, vorzugsweise bis zu 40 Gew.-% eines faser- oder teilchenförmigen Füllstoffs oder deren Mischungen enthalten.

Als verstärkend wirkende Füllstoffe seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 mm, vorzugsweise 8 bis 50 mm eingesetzt werden können, wobei die faserförmigen Füllstoffe nach ihrer Einarbeitung vorzugsweise eine mittlere Länge von 0,05 bis 1 mm, insbesondere 0,1 bis 0,5 mm aufweisen.

Andere geeignete Füllstoffe sind beispielsweise Wollastonit, Calciumcarbonat, Glaskugeln, Quarzmehl, Si- und Bornitrid oder Mischungen dieser Füllstoffe.

Neben den Komponenten A) und B) sowie ggf. C) können die erfindungsgemäßen Formmassen noch übliche Zusatzstoffe und Verarbeitungshilfsmittel D) enthalten in Mengen bis zu 30, vorzugsweise bis zu 20 Gew.-%. Nur beispielhaft seien hier Zusätze zum Abfangen von Formaldehyd (Formaldehyd-Scavenger), Weichmacher, Schmiermittel, Antioxidantien, Haftvermittler, Lichtstabilisatoren und Pigmente genannt. Der Anteil solcher Zusätze liegt im allgemeinen im Bereich von 0,001 bis 5 Gew.-%.

Als Nukleierungsmittel können die erfindungsgemäßen Formmassen gemäß einer bevorzugten Ausführungsform ein Malein-Formaldehyd-Kondensat enthalten. Geeignete Produkte werden z.B. in der DE 25 40 207 beschrieben.

Entsprechende Verbindungen sind dem Fachmann bekannt und beispielsweise in der EP-A 327 384 beschrieben.

Die Herstellung der erfindungsgemäßen thermoplastischen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Die erfindungsgemäßen thermoplastischen Formmassen zeichnen sich durch ein ausgewogenes Eigenschaftsspektrum, insbesondere durch eine sehr geringe Formbelagsbildung bei der Verarbeitung aus.

Demzufolge eignen sie sich zur Herstellung von Formkörpern jeglicher Art, wobei Anwendungen, bei denen hohe Zähigkeiten gefordert sind (z.B. im Transportsektor) bevorzugt sind.

### Beispiele

### 1. Herstellung der thermoplastischen Polyurethane (Komponente B)

Zusammensetzung in Gew.-% der eingesetzten Komponenten B/1 bis B/6V
- 41,4 Gew.-%: Adipinsäure
- 24,1 Gew.-%: Methylendiphenyl-4,4'-diisocyanat
- 33,8 Gew.-%: Butan-1,4-diol
- 0,7 Gew.-%: Bis-(2,6-diisopropylphenyl)-carbodiimid

### Komponente B/1

1000 g (0,435 mol) Polyesterpolyol, hergestellt aus 694 g (4,752 mol) Adipinsäure und 467 g (5,184 mol) Butandiol, mit einer OH-Zahl von 56, entsprechend einem Zahlenmittel des Molekulargewichtes von 2300, wurden bei 100°C und 20 mbar 30 min entwässert und unter Rühren mit 105 g (1209 mol) Butan-1,4-diol sowie 11 g (0,031 mol) Bis-(2,6-diisopropylphenyl)-carbodiimid versetzt. Anschließend wurde in die Mischung bei 125°C (Starttemperatur) 425 g (1,698 mol) auf 50°C temperiertes Methylendiphenyl-4,4'-diisocyanat eingerührt und homogenisiert. Nachdem die Temperatur (Ausgußtemperatur) der Reaktionsmasse 165°C erreichte, wurde diese auf eine auf 150°C vorgeheizte Platte gegossen.

Das Reaktionsgemisch verfestigte sich innerhalb weniger Minuten und wurde zur Vervollständigung der Reaktion 24 h bei 100°C thermisch gereift und danach granuliert und konfektioniert.

### Komponente B/2

wurde entsprechend Beispiel 1 hergestellt, jedoch bei folgenden Temperaturen:
Starttemperatur: 120°C
Ausgußtemperatur: 160°C

### Komponente B/3

wurde entsprechend Beispiel 1 hergestellt, jedoch bei folgenden Temperaturen:
Starttemperatur: 110°C
Ausgußtemperatur: 155°C

### Komponente B/4

wurde entsprechend Beispiel 1 hergestellt, jedoch bei folgenden Temperaturen:
Starttemperatur: 105°C
Ausgußtemperatur: 150°C

### Komponente B/5

wurde entsprechend Beispiel 1 hergestellt, jedoch bei folgenden Temperaturen:
Starttemperatur: 102°C
Ausgußtemperatur: 148°C

### Komponente B/6

wurde entsprechend Beispiel 1 hergestellt, jedoch bei folgenden Temperaturen:
Starttemperatur: 100°C
Ausgußtemperatur: 145°C

### Komponente B/1V

wurde entsprechend Beispiel 1 hergestellt, jedoch bei folgenden Temperaturen:
Starttemperatur: 60°C
Ausgußtemperatur: 100°C

### Komponente B/2V

wurde entsprechend Beispiel 1 hergestellt, jedoch bei folgenden Temperaturen:
Starttemperatur: 65°C
Ausgußtemperatur: 105°C

### Komponente B/3V

wurde entsprechend Beispiel 1 hergestellt, jedoch bei folgenden Temperaturen:
Starttemperatur: 67°C
Ausgußtemperatur: 106°C

### Komponente B/4V

wurde entsprechend Beispiel 1 hergestellt, jedoch bei folgenden Temperaturen:
Starttemperatur: 70°C
Ausgußtemperatur: 110°C

### Komponente B/5V

wurde entsprechend Beispiel 1 hergestellt, jedoch bei folgenden Temperaturen:
Starttemperatur: 75°C
Ausgußtemperatur: 115°C

### Komponente B/6V

wurde entsprechend Beispiel 1 hergestellt, jedoch bei folgenden Temperaturen:
Starttemperatur: 85°C
Ausgußtemperatur: 125°C

Die Eigenschaften der erfindungsgemäßen und Vergleichskomponenten B/1 bis B/6V sind der nachstehenden Tabelle 1 zu entnehmen.

### MFR-Bestimmung:

Das Granulat wurde 15 h bei 80°C getempert und anschließend bei 200°C und 21,6 kg Auflagegewicht der MFR gemessen (DIN 53735).

### VZ-Bestimmung:

Die Bestimmung erfolgte in einer 1 %igen Lösung aus TPU-Granulat in N-Methylpyrrolidon : Dibutylamin im Verhältnis 99:1 bei 25°C nach ISO 1628 Teil 1.

### Schmelzpunkt:

Hierfür wurden ca. 13 mg TPU-Granulat in eine Alu-Kapsel (0,6 mm) eingewogen und 5 min bei RT mit Stickstoff gespült (Durchlaufgeschwindigkeit ca. 3 l/h). Anschließend wurde das Granulat zehn Minuten bei 100°C in dieser Stickstoffatmosphäre getrocknet und bei einer Aufheizrate von 20°C/min von -100°C bis +250°C gemessen. (General V 4.1 C Du Pont 2000).

**Tabelle 1**

| Komponente B | MFR [g/10 min] | VZ [ml/g] | Tₘ [°C] |
|---|---|---|---|
| B1 | 25,0 | - | 165,5 |
| B2 | 22,0 | - | 168,2 |
| B3 | 21,0 | 200 | 179,9 |
| B4 | 35,0 | 131 | 186,6 |
| B5 | 30,0 | 129 | 189,6 |
| B6 | 35,0 | 125 | 189,8 |
| B/1V | 8,0 | 137 | 209,0 |
| B/2V | 19,0 | 145 | 207,0 |
| B/3V | 15,0 | 460 | 207,2 |
| B/4V | 14,0 | 156 | 208,4 |
| B/5V | 13,0 | - | 206,9 |
| B/6V | 17,0 | - | 200,6 |

### 2. Herstellung der POM/TPU-Formmassen

### Komponente A)

Polyoxymethylencopolymerisat aus 97,3 Gew.-% Trioxan und 2,7 Gew.-% Butandiolformal. Das Produkt enthielt noch ungefähr 3 Gew.-% nicht umgesetztes Trioxan und 5 Gew.-% thermisch instabile Anteile. Nach Abbau der thermisch instabilen Anteile hatte das Copolymer einen Schmelzindex von 9 g/10 min. (190°C, 2,16 kg Auflagegewicht nach ISO 1133).

Die Komponente A) wurde auf einem Zweischneckenextruder (ZSK 30 Werner & Pfleiderer) eingebracht und mittels Seitenextruder jeweils 20 Gew.-% der Komponenten B/1 bis B/6V bei 230°C zudosiert, homogenisiert, entgast und das homogenisierte Gemisch durch eine Düse ausgetragen und als Strang ausgepreßt und granuliert.

Zur Prüfung der Formbelagsbildung wurden Spritzgußkörper (Dimensionen: Erstarrungskreuz, Flußweg 100 mm, Dicke 1,5 mm, Breite eines Armes des Kreuzes 30 mm) bei T = 200°C hergestellt.

Nach 120 Zyklen wurde der Formbelag visuell am Werkzeug (Spritzgußform) beurteilt. Die Ergebnisse sind der Tabelle 2 zu entnehmen.

**Tabelle 2**

| Beispiel | Komponente A [Gew.-%] | Komponente B [Gew.-%] | Formbelag |
|---|---|---|---|
| 1 | 80 | 20 B/1 | kein Formbelag |
| 2 | 80 | 20 B/2 | kein Formbelag |
| 3 | 80 | 20 B/3 | kein Formbelag |
| 4 | 80 | 20 B/4 | kein Formbelag |
| 5 | 80 | 20 B/5 | kein Formbelag |
| 6 | 80 | 20 B/6 | kein Formbelag |
| 7^{*)} | 80 | 20 B/1V | sehr starker Formbelag |
| 8^{*)} | 80 | 20 B/2V | sehr starker Formbelag |
| 9^{*)} | 80 | 20 B/3V | sehr starker Formbelag |
| 10^{*)} | 80 | 20 B/4V | sehr starker Formbelag |
| 11^{*)} | 80 | 20 B/5V | starker Formbelag |
| 12^{*)} | 80 | 20 B/6V | mittlerer Formbelag |

| | | | |
|---|---|---|---|
| ^{*)} zum Vergleich | | | |

## Patentansprüche

1. Thermoplastische Formmassen, enthaltend
A) 10 bis 99,5 Gew.-% eines thermoplastischen Polymeren aus der Gruppe der Polyoxymethylene, Polyolefine, Polyester, Polycarbonate, Polystyrol, ABS, ASA, SAN, Polyamide oder Poly(meth)acrylate oder deren Mischungen,
B) 0,5 bis 80 Gew.-% eines thermoplastischen Polyurethans mit einem Schmelzpunkt < 200°C,
C) 0 bis 50 Gew.-% eines faser- oder teilchenförmigen Füllstoffes oder deren Mischungen,
D) 0 bis 30 Gew.-% üblicher Zusatzstoffe und Verarbeitungsmittel,
wobei die Gewichtsprozente der Komponenten A) bis D) 100 % ergeben, **dadurch gekennzeichnet, daß** das thermoplastische Polyurethan B) erhältlich ist durch Umsetzung von
a) organischen Diisocyanaten,
b) Polyhydroxylverbindungen mit Molekulargewichten von 500 bis 8000 und
c) Kettenverlängerungsmitteln mit Molekulargewichten von 60 bis 400 in Gegenwart von gegebenenfalls
d) Katalysatoren,
e) Hilfsmitteln und/oder Zusatzstoffen
bei einer Starttemperatur ≥ 100°C, einer Ausgußtemperatur von 140 bis 200°C und anschließender thermischer Reifung.

2. Thermoplastische Formmassen nach Anspruch 1, enthaltend
A) 15 bis 99 Gew.-% eines Polyoxymethylenhomo- oder copolymerisates,
B) 1 bis 60 Gew.-% eines thermoplastischen Polyurethans mit einem Schmelzpunkt < 200°C.

3. Thermoplastische Formmassen nach den Ansprüchen 1 oder 2, in denen die Komponente B) einen Schmelzpunkt < 195°C aufweist.

4. Thermoplastische Formmassen nach Anspruch 1, wobei die thermische Reifung bei Temperaturen von 60 bis 120°C über einen Zeitraum von 2 bis 48 Stunden durchgeführt wird.

5. Verwendung der thermoplastischen Formmassen gemäß den Ansprüchen 1 bis 4 zur Herstellung von Fasern, Folien und Formkörpern.

6. Formkörper, erhältlich aus den thermoplastischen Formmassen gemäß den Ansprüchen 1 bis 4.

## Claims

1. A thermoplastic molding material containing
A) from 10 to 99.5% by weight of a thermoplastic polymer selected from the group consisting of the polyoxymethylenes, polyolefins, polyesters, polycarbonates, polystyrene, ABS, ASA, SAN, polyamides or poly(meth)aerylates or mixtures thereof,
B) from 0.5 to 80% by weight of a thermoplastic polyurethane having a melting point of < 200°C,
C) from 0 to 50% by weight of a fibrous or particulate filler or a mixture thereof and
D) from 0 to 30% by weight of conventional additives and processing assistants,
the percentages by weight of the components A) to D) summing to 100%, wherein the thermoplastic polyurethane B) is obtainable by reacting
a) organic diisocyanates,
b) polyhydroxy compounds having molecular weights of from 500 to 8000 and
c) chain extenders having molecular weights of from 60 to 400 in the presence or absence of
d) catalysts and
e) assistants and/or additives
at an initial temperature of ≥ 100°C and a pouring temperature of from 140 to 200°C and with subsequent thermal maturing.

2. A thermoplastic molding material as claimed in claim 1, containing
A) from 15 to 99% by weight of a polyoxymethylene homo- or copolymer and
B) from 1 to 60% by weight of a thermoplastic polyurethane having a melting point of < 200°C.

3. A thermoplastic molding material as claimed in claim 1 or 2, in which the component B) has a melting point of < 195°C.

4. A thermoplastic molding material as claimed in claim 1, wherein the thermal maturing is carried out at from 60 to 120°C over a period of from 2 to 48 hours.

5. Use of a thermoplastic molding material as claimed in any of claims 1 to 4 for the production of fibers, films and moldings.

6. A molding obtainable from a thermoplastic molding material as claimed in any of claims 1 to 4.

## Revendications

1. Masses de moulage thermoplastiques, contenant
A) 10 à 99,5% en poids d'un polymère thermoplastique du groupe formé par les polyoxyméthylènes, polyoléfines, polyesters, polycarbonates, polystyrène, ABS, ASA, SAN, polyamides ou poly(méth)acrylates, ou leurs mélanges,
B) 0,5 à 80% en poids d'un polyuréthanne thermoplastique d'un point de fusion < 200°C,
C) 0 à 50% en poids d'une charge fibreuse ou particulaire, ou leurs mélanges,
D) 0 à 30% en poids d'autres additifs et adjuvants de traitement usuels,
les pourcentages en poids des composants A) à D) totalisant 100%, **caractérisées en ce que** le polyuréthanne thermoplastique peut être obtenu par réaction de
a) diisocyanates organiques,
b) composés polyhydroxylés possédant des poids moléculaires de 500 à 8000 et
c) agents d'allongement de chaîne possédant des poids moléculaire de 60 à 400, en présence éventuellement
d) de catalyseurs,
e) d'adjuvants et / ou d'additifs
à une température de départ ≥ 100°C, une température de coulée de 140 à 200°C et une maturation thermique subséquente.

2. Masses de moulage thermoplastiques selon la revendication 1, contenant
A) 15 à 99% en poids d'un homopolymère ou d'un copolymère de polyoxyméthylène,
B) 1 à 60% en poids d'un polyuréthanne thermoplastique d'un point de fusion < 200°C.

3. Masses de moulage thermoplastiques selon la revendication 1 ou 2, dans lesquelles le composant B) présente un point de fusion <195°C.

4. Masses de moulage thermoplastiques selon la revendication 1, où la maturation thermique est entreprise à des températures de 60 à 120°C sur un laps de temps de 2 à 48 heures.

5. Utilisation des masses de moulage thermoplastiques selon les revendications 1 à 4 pour la production de fibres, feuilles et corps moulés.

6. Corps moulés, que l'on peut obtenir à partir des masses thermoplastiques selon les revendications 1 à 4.
